# EUROPEAN PATENT SPECIFICATION

(11) **EP 2 249 140 B1**
(45) Date of publication and mention of the grant of the patent: **27.06.2018**
(21) Application number: 10158316.9
(22) Date of filing: 30.03.2010
(51) Int. Cl.: G01N 1/08, A61B 10/02

(54) **Method for excising biological samples on a solid support**
Verfahren zum Herausschneiden von biologischen Proben auf einem festen Träger
Procédé d'extraction d'échantillons biologiques sur un support solide

(30) Priority: 07.05.2009 EP 09100270
(43) Date of publication of application: 10.11.2010
(73) Proprietor: F. Hoffmann-La Roche AG, 4070 Basel (CH); Roche Diagnostics GmbH, 68305 Mannheim (DE)
(72) Inventor: Siedel, Joachim Walter, 82347 Bernried (DE); Nussbaum, Urs, 6274 Eschenbach (CH); Gruebl, Tomas, 6333 Huenenberg See (CH); Pretsch, Robert-Elmar, 6343 Rotkreuz (CH)
(74) Representative: Merkel, Patrick

(56) References cited:
- WO-A-01/50121
- WO-A-2006/110457
- CA-A1- 2 380 736
- US-A1- 2003 039 788
- US-A1- 2007 021 684
- US-A1- 2008 064 983

## Description

### Field of the invention

The present invention belongs to the field of analytics, particularly the separation and/or isolation of biological materials such as nucleic acids or proteins in or from complex mixtures. Within that field, the present invention relates to excising a biological sample located on a solid support.

### Background of the invention

The application of biological samples such as e.g. blood onto solid supports and subsequent analysis of such samples have been of considerable practical significance in recent years. These techniques are particularly important in countries where diagnostic analysis of clinical samples has to be performed in few centralized laboratories which are often located at large distances from the place of collecting the respective samples from patients.

In a typical exemplary setup, a sample such as blood is collected from a patient and attached, e.g. by drying, to a solid support like a filter paper. The dried blood spot can then be transported to a distant laboratory without the need for cooling the sample. For analysis, the portion of the solid support containing the biological sample is usually separated from the remaining part of the support by excision using an excising device. This separation is done in order to minimize the material not containing any sample. Moreover, excised portions of a relatively small size can, for example, be more easily transferred into a vessel such as a vial for nucleic acid binding and/or analysis.

Typically, said excising device is subsequently used for the next excision, which bears a significant risk of contamination by carrying over sample material from the previous excision. Especially in the case of material that becomes amplified during analysis (e.g. nucleic acids), already very little amounts of contamination can lead to false positive results in qualitative assays, or to overestimation of a titer in quantitative assays. Both problems may have a severe impact on diagnosis or the respective treatment of diseases.

The prior art has tried to solve this problem by cleaning the excising device between two excisions. This approach comprises the following methods:
- single or multiple excisions of clean filter paper in the absence of a sample (Driver, A. et al, J. Virological Methods 2007, 146:397-400)
- ethanol-treatment and flaming of the excision device (Caggana, M. et al, Human Mutation 1998, 1:404-409)
- sequential cleaning of the excision device with a) Na-hypochlorite, b) water and c) ethanol (Bonne, N. et al, J. Veterinary Diagnostic Investigations 2008, 20:60-63)

A different approach in the art - in the field of electrophoresis gels or agar plates - is taught by WO 01/50121. The apparatus disclosed therein aims at multiple sample retrieval from gels without cross-sample contamination from previously excised samples. Specifically, the sample retrieval apparatus is able to engage a cutting tip, cut a desired spot, band or plaque from a gel, deposit the desired band or plaque into a container, such as a multi-well plate for processing, and disengage the used cutting tip.

The present invention provides an alternative solution displaying several advantages.

### Description of the invention

The present invention provides a method for excising a biological sample on a solid support. Furthermore, analytical kits and systems as well as an excising device for excising a biological sample on a solid support are disclosed.

In a first aspect, the invention relates to the following:A method for excising a portion from a solid support containing a biological sample, said method comprising the steps:
a) providing a biological sample on a solid support, wherein said solid support is made of at least one material selected from the group of cellulose, glass, plastic, or cotton
b) providing an excising device for excising a portion of a solid support containing a biological sample, said device comprising a punch and a bearing, said punch comprising a cutting edge being a grommet made of metal, said device further comprising a fixture connecting said punch and said bearing and guiding them in relation to each other
c) excising a portion of said solid support containing said biological sample with said device by pressing said cutting edge against said solid support which is supported by said bearing, wherein the cutting edge is disabled by deformation as a result of the excision
d) separating said excised portion of said solid support containing said biological sample from the remainder of the solid support
e) removing said cutting edge from said excising device and discarding said cutting edge
wherein said solid support and said bearing are separated by a separation layer.

The present invention thereby provides a method to reduce the risk of contamination mentioned above without the need of cumbersome and/or expensive decontamination steps between two consecutive excision events.

In addition, some of the proposed solutions described in the prior art still bear a considerable risk of contamination. For instance, Bonne et al (see supra) describe that even after applying multiple excisions of clean filter paper in the absence of a sample between two sample excisions false positive results are obtained.

When exchanging the cutting edge after each excision according to the method of the present invention, these additional excisions of clean filter paper are not necessary, rendering the process faster and requiring less solid support material. Furthermore, the fact that a clean cutting edge is employed leads to a minimal risk of carryover contamination.

In this context, it is advantageous if the respective disposable element, i.e. the cutting edge, is packed in a contamination-free manner. As an example, sterile and/or nucleic acid-free cutting edges may be provided in an airproof plastic packaging, while other packaging materials may also be suitable. Advantageously, such packaging may allow the artisan to replace the disposable element while only touching the packaging and not the cutting edge. For ejecting or retrieving a disposable element such as a cutting edge, it may be advantageous if it can be removed e.g. by moving a lever.

In the case of other decontamination steps described in the prior art, such as application of ethanol or flame-sterilizing the excision device, the following problems may appear:
- For manual methods, the artisan has to apply mostly multiple time-consuming steps between two sample excisions and still has no means to control whether his attempts to dispose of the former sample material were successful, unless he additionally applies laborious control measures.
- For automation of the excision process, means for alcohol-rinsing or flame-sterilizing the cutting edge or device would have to be implemented and integrated into the respective instrument. This would lead to increased complexity of the setup, additional sources of malfunction, and additional costs.

The present invention abolishes the need for these additional steps and thus increases efficiency of the excision process and saves costs. It has to be understood that the invention can be advantageously carried out both in a manual and an automated setup. In the case of automated systems, it contributes to reducing the complexity of the excision device or the overall system since no cleaning or decontamination measures have to be integrated.

In comparison to excision devices like scalpels or scissors, which do not provide any guidance with respect to position and shape of the excised portion of the solid support containing the sample, the present invention makes use of a punch and a bearing that are laterally specifically positioned and guided in relation to each other. This setup allows for an accurate and reproducible excision.

Preferably, the cutting edges that are replaced after each excision have the same dimensions as the previous ones.

In the case that different sizes of specific subsets of excisions are desired, the cutting edges may be adapted accordingly. Therefore, reproducibility can also be easily achieved within specific subsets of excisions and thus samples.

Said reproducibility is particularly advantageous if quantitative analysis is to be carried out with the respective sample.

In a preferred embodiment of the invention, the method described above further comprises transferring said portion of the solid support to a vessel.

Transferring said portion of the solid support to a vessel is preferably carried out in step d).

In a vessel, the sample can e.g. be eluted from the solid support and subsequently be subjected to e.g. biochemical or molecular biological analysis.

A vessel can be e.g. a tube or plate. If analytical reaction takes place within the vessel, its outer limits or walls should be chemically inert such that they do not interfere with the reaction. In this embodiment it may be of advantage if the vessel is sealable, e.g. by means of a cap that is connected to the vessel and placed on the opening after transferring the excised portion of the solid support into the vessel. Especially when said vessel has to be transported, e.g. to an analytical unit located at a certain distance from the place of excising, sealing or closing the vessel further reduces the risk of contamination.

In a further preferred embodiment of the invention, said bearing is the rim of a vessel opening.

In this embodiment, the excised portion of the solid support containing the sample directly falls into the vessel or can be pushed into said vessel using a clean device such as a pipet tip. It is advantageous to use such a device only once as well, in order to further decrease the risk of contamination through said device as a potential carrier. This embodiment further eases the workflow as it abolishes the need to handle the excised portion of the solid support containing the sample. Moreover, such direct transfer into a vessel further reduces the risk of contamination. The embodiment is especially useful in view of an automation of the method.

Particularly in the aforementioned, but also in other embodiments, it is advantageous if the vessel is attached to the excising device by a lock system. Possible non-limiting examples would be a screw coupling or a snap fit. It is advantageous if the vessel can be removed from the excising device for further processing of the sample.

A solid support in the context of the invention is a suitable material to which a biological sample can be attached. Preferably, the solid support consists of a material that absorbs liquids in a way that they can be dried on it. It is advantageous if the solid support consists of a porous material. The solid support is preferably a fleece. More precisely, said solid support is made of at least one material selected from the group of cellulose, glass, plastic, or cotton. In a preferred embodiment of the invention, the solid support is a filter paper. The solid support is essentially flat, in a way that excisions can be carried out easily. An example for a solid support is a sheet of filter paper. Furthermore, the solid support can consist of one or several layers, wherein said layers can be made of the same or different materials.

A biological sample can be any sample of natural origin. Preferably, the biological sample is a clinical sample to be analyzed for the presence or absence of pathogens or markers of a disorder. Also preferably, a biological sample is derived from a human and is a body liquid. In a preferred embodiment of the invention, the biological sample is blood.

A portion of a solid support containing a biological sample means the portion of the material described above to which the biological sample is applied. If the biological sample is a fluid such as e.g. blood, then said portion is typically round-shaped, as said fluid is usually applied as a drop and then allowed to dry on the solid support.

A punch is a device or part of a device for removing a portion of an essentially flat material such as a solid support by applying pressure to it. In order to exert said pressure, a punch usually requires a bearing against which the punch presses the material.

Said bearing can be any material physically resisting the pressure exerted by the punch without breaking, such as e.g. metal, wood, ceramic, stone or plastic or others. Preferably, the bearing is made of metal. Preferably, the bearing comprises a movable element. In this embodiment, the solid support is placed on said movable element such that the solid support on said movable element can be moved laterally on the bearing. The movable element can be made of the same or different material as the bearing. Preferably, it is made of metal. In a preferred embodiment, said movable element is a sled. The bearing advantageously comprises a holder to which the solid support is removably attached. Such a holder may for example be an arrangement of pins to laterally fasten the solid support on the bearing. Another example would be a clip system. However, the holder is not limited to these examples. If the bearing also comprises a movable element, the holder is preferably a part of said movable element.

A cutting edge is a part of an excising device, wherein said cutting edge is the part that is in direct physical contact with the solid support containing the biological sample and thus bringing about the excision. The cutting edge in the sense of the invention is attached to the punch and thus pressed against the solid support and the bearing, respectively. The cutting edge is hollow. Its shape can be e.g. elliptic or round-shaped, but is not restricted to these shapes. The cutting edge is a grommet, wherein said grommet is preferably made of metal or plastic. Preferred metal is steel. Further preferred is brass.

A fixture in the context of the invention is an element of the excising device connecting and laterally positioning the punch and the bearing relatively to each other. When punch and bearing are moved towards or away from each other in the method according to the invention, the fixture provides guidance of this movement. Preferably, said movement occurs in parallel to the fixture and orthogonally to the punch and the bearing or the solid support, respectively. The fixture further provides for a spacing between punch and bearing in a starting or resting position, whereas in an excision position, i.e. when punch and bearing are very close to each other, it may provide for a reset force that can be exploited to separate punch and bearing after the excision and to bring them back into their starting position. In view of these functions, the fixture ideally exhibits rigid as well as flexible properties. Various materials are suitable to fulfill these requirements. One example may be a bar made of metal, wherein a spring mediates the reset force. Another possibility may be a plastic fixture, wherein the plastic material confers both rigid and flexible properties.

A separation layer, in the context of the invention, prevents direct contact between the solid support and the bearing. Therefore, it is preferably placed between the solid support and the bearing. The separation layer can be made of any material physically resisting the pressure exerted by the punch without breaking. Suitable materials are, for example, rubber, plastic, paper, cartridge, cloth or combinations of these materials that may form multiple layers. Preferably, the material is a combination of plastic and paper. Advantageously, the separation layer can be self-adhering to the solid support and/or the bearing. In a preferred embodiment, the method described above further comprises discarding said separation layer or moving said separation layer such that for each excision a portion of said separation layer is used that had not previously been in contact with the solid support. If the bearing comprises a movable element, the separation layer is preferably placed between said movable element and said solid support.

The cutting edge is disabled as a result of the excision in step c).

The cutting edge, being a grommet, is deformed during the excision preferably in a way that it cannot be used for further excisions. At least, the deformation leads to severe problems when attempting to use the cutting edge for further excisions, e.g. because the cutting edge is not sharp enough anymore once it has been used. This avoids accidental multiple use of a cutting edge, thus assuring a very low contamination risk.

A hollow cutting edge preferably stabilizes the excised portion of the solid support within the cutting edge, i.e., within the grommet. Preferably, the cutting edge is deformed towards the inside. Thus, the excised portion is held within the hollow cutting edge by mechanical forces. The e.g. ring-shaped or otherwise hollow cutting edge is then preferably placed on the opening of a vessel, whereby the rim of the vessel and the inner limits of the cutting edge essentially fit onto each other. Thus, the excised portion of the solid support can be easily transferred into the vessel e.g. by pushing it out of the cutting edge with a sterile pipet tip or other suitable means.

In another preferred embodiment, the punch is a vessel.

In contrast to the embodiments described supra, the vessel does not serve as a bearing but as a punch. In this context, said vessel has a cutting edge attached to or integrated into its opening. This could be realized e.g. in the form of a metal edge attached to the opening of the vessel. Another example may be a sharp rim of the vessel opening made of the same material as the vessel, for example plastic, wherein the sharp rim may be obtained e.g. by injection molding. This embodiment may be particularly advantageous when disposable vessels are used in connection with a multi-use excision device. No manipulation of the device has to be performed between two excisions, but only the vessel is handled. This further decreases the contamination risk especially due to carryover of a person handling the excision device.

In a preferred embodiment, the cutting edge is ring-shaped.

A ring-shaped cutting edge, such as a grommet, bears the advantage of being suited to excise round-shaped samples like a drop of blood, i.e. the area of the solid support not containing any sample, but being also excised, is very small. In the case of a ring-shaped cutting edge, its diameter is preferably 1 mm to 20 mm, more preferably 3 to 20 mm, more preferably 5 to 15 mm, still more preferably 8 to 14 mm and most preferably 10 to 13 mm.

Further useful in the context described herein may be a kit in order to carry out the method described supra. Therefore, further described herein is the following:
An analytical kit for analyzing a biological sample on a solid support, said kit comprising
- An excising device for excising a portion of a solid support containing a biological sample, said device comprising:
   - a punch comprising a removable single-use cutting edge for excising a portion of said solid support containing said biological sample
   - a bearing
   - a fixture connecting said punch and said bearing and guiding them in relation to reach other,
   - a separation layer for separating said bearing and said solid support,
   the kit further comprising a solid support for receiving a biological sample and/or further comprising a reagent for the analysis of a biological sample.

A removable single-use cutting edge is a cutting edge that is used only for one excision. It is preferably disabled as a result of an excision in a way that it cannot be used for further excisions.

A reagent for the analysis of a biological sample can be any reagent that is useful for bioanalytical purposes. Such reagents comprise, but are not limited to, nucleic acid polymerases, buffers, antibodies, detection probes, dyes, and more.

Preferably, said punch is only in physical contact with said solid support via said removable single-use cutting edge. This measure further decreases the risk of contamination.

Only replacing the cutting edge instead of the complete device is less costly and may be e.g. advantageous for automation.

As the kit described herein can be used in a system comprising other elements it interacts with, the following is also disclosed herein:
An analytical system comprising an analytical kit as described above, further comprising one or more elements selected from the group consisting of:
- a reaction module containing the components of a chemical and/or biochemical reaction
- a detection module for detecting signals evoked by an analyte
- a storage module for reagents and/or disposables.

An analytical system is an arrangement of components such as instruments interacting with each other with the ultimate aim to analyze a given sample.

A reaction module can comprise a variety of vessels like tubes or plates, in which a reaction for the analysis of the sample such as Polymerase Chain Reaction (PCR) or hybridization of antibodies takes place. The outer limits or walls of such vessels are chemically inert such that they do not interfere with the analytical reaction taking place within. If the material to be analyzed is nucleic acids, there are various methods applicable in this context, one very significant method being the Polymerase Chain Reaction mentioned above.

The Polymerase Chain Reaction is disclosed, among other references, in U.S. Patent Nos. 4,683,202, 4,683,195, 4,800,159, and 4,965,188.

A detection module can e.g. be an optical detection unit for detecting the result or the effect of the analysis procedure. An optical detection unit may comprise a light source, e.g. a xenon lamp, optics such as mirrors, lenses, optical filters, fiber optics for guiding and filtering the light, one or more reference channels, or a CCD camera.

A storage module stores the necessary reagents to bring about a chemical or biological reaction important for analysis of the sample in question. It can also contain further components useful for the method of the invention, e.g. disposables such as pipet tips or vessels to be used as reaction receptacles within the reaction module.

Preferably, the analytical system described herein further comprises a control unit for controlling system components.

Such a control unit may comprise software for ensuring that the different components of said analytical system work and interact correctly and with the correct timing, e.g. moving components such as the sample to the reaction module in a coordinated manner. The control unit may also comprise a processor running a real-time operating system (RTOS), which is a multitasking operating system intended for real-time applications. In other words the system processor is capable of managing real-time constraints, i.e. operational deadlines from event to system response regardless of system load. It controls in real time that different units within the system operate and respond correctly according to given instructions.

The present disclosure further describes the following device:
An excising device for excising a portion of a solid support containing a biological sample, said device comprising:
- a punch comprising a removable single-use cutting edge for excising a portion of said solid support containing said biological sample, wherein said punch is only in physical contact with said solid support via said removable single-use cutting edge and
- a bearing
- a fixture connecting said punch and said bearing and guiding them in relation to reach other
- a separation layer for separating said bearing and said solid support..

A further aspect described herein is the use of the kit, the system or the device described herein in methods for analyzing a biological sample.

Furthermore described herein is the use of the kit, the system or the device described herein in methods for detecting a pathogen.

Pathogens to be detected in a sample can be viruses, bacteria, fungi or other agents causing diseases or disorders. Examples for viruses are HIV (Human Immunodeficiency Virus), HCV (Hepatitis C Virus) or HBV (Hepatitis A Virus).

### Figure legends:

Fig. 1: Schematic side view of an excising device and a solid support
Fig. 2: Perspective view of an excising device and a solid support containing a biological sample according to Fig. 1
Fig. 3: Perspective view of a vessel containing a portion of a solid support containing a biological sample
Fig. 4: Depiction of the workflow of an excision and subsequent transfer of the excised portion of the solid support to a vessel
Fig. 5: Perspective use of an excising device wherein the punch is a vessel
Fig. 6: Perspective view of a device and mechanism for inserting or ejecting the cutting edge which can be used e.g. in embodiments according to figures 1 to 4

### Description of the figures

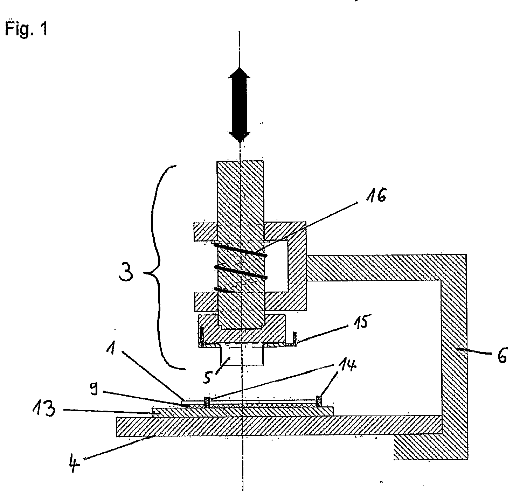

Fig. 1: Schematic side view of an excising device and a solid support

Depicted is an excising device with a solid support (1) containing a biological sample (not shown) placed on a laterally movable sled (13) which is part of a bearing (4), wherein the solid support and the sled or the bearing, respectively, are separated by a separation layer (9) that can be removed after use. The solid support and the separation layer are attached to the sled or the bearing, respectively, with the help of a holder (14). The bearing is interconnected with the punch (3) comprising a cutting edge (5) by means of a fixture (6). The fixture also provides for specific positioning and guiding of the bearing and the punch relatively to each other, so that the movement of the punch toward the bearing is laterally guided. In this depiction, the punch comprises a lever (15) as a mechanism for inserting or ejecting the cutting edge, and further a spring (16) applying a reset force upon a vertical movement of the punch toward the solid support.

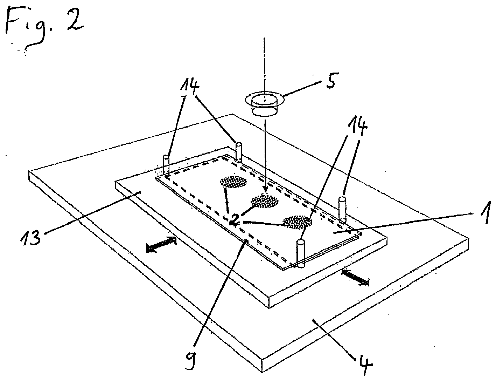

Fig.2: Perspective view of an excising device and a solid support containing a biological sample according to Fig. 1

The solid support (1), depicted with a dotted line, is placed on a sled as a laterally movable element (13) as part of a bearing (4) with the help of pins as a holder (14), wherein solid support and sled are separated by a separation layer (9). In this depiction, it contains three round-shaped biological samples (2) to be excised via the cutting edge (5) comprised by the punch (not shown). The fixture connecting the punch and the bearing is not depicted for the sake of clarity.

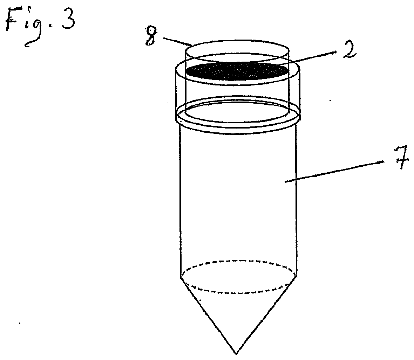

Fig. 3: Perspective view of a vessel containing a portion of a solid support containing a biological sample

In the depicted embodiment, a vessel (7) is provided as a receptacle for the excised portion of the solid support containing the biological sample (2). At the same time, the rim of the vessel opening (8) serves as a bearing.

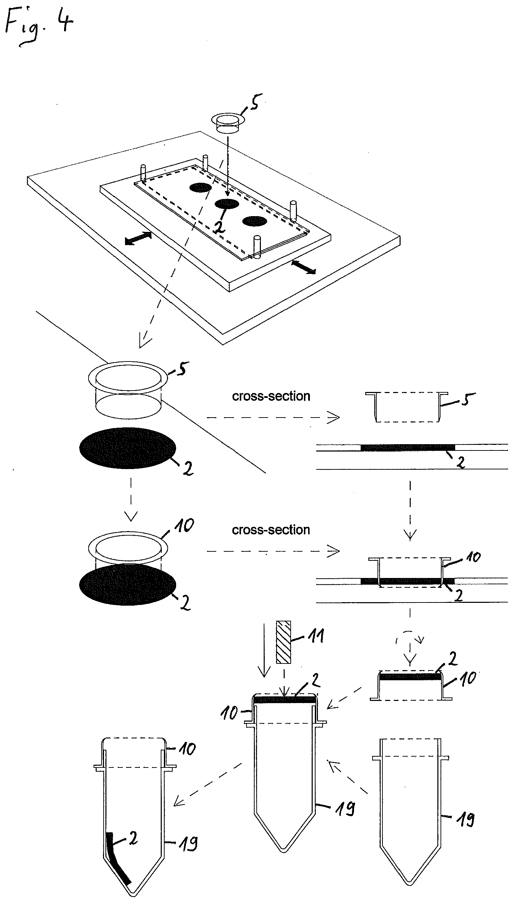

Fig. 4: Depiction of the workflow of an excision and subsequent transfer of the excised portion of the solid support to a vessel

In this embodiment, a portion of solid support (2) is excised with a cutting edge (5), whereby the cutting edge is disabled by deformation as a result of the excision. From its original, functional shape (5) it is converted into a non-functional form (10), i.e. it is not available for further excision procedures. However, it is deformed towards its inside, such that the excised portion of solid support (2) is stabilized within the deformed cutting edge. In the depicted embodiment, the deformed cutting edge (10) is then turned around and placed on the rim of a receiving vessel (19), so that the excised portion of solid support can be easily pushed into the receiving vessel by using a sterile device (11) which can e.g. be a sterile pipet tip. The empty deformed cutting edge can then by removed from the vessel and discarded, and the vessel may subsequently be closed. The order of the steps within the depicted workflow is indicated by dotted arrows.

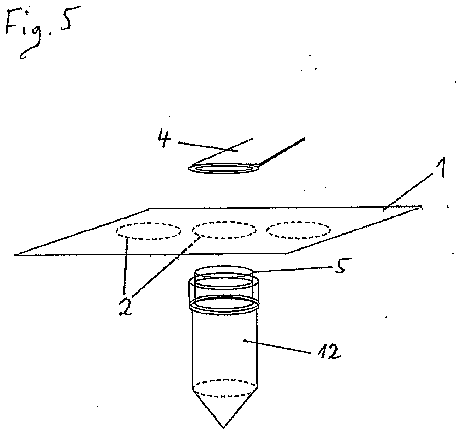

Fig. 5: Perspective view of an excising device wherein the punch is a vessel

In this embodiment, the cutting edge (5) is integrated into the rim of the opening of a vessel forming the punch (12). The solid support (1) comprising a biological sample (2) is oriented with the sample facing the cutting edge comprised by the vessel. The fixture connecting the bearing and the vessel is not depicted for the sake of clarity.

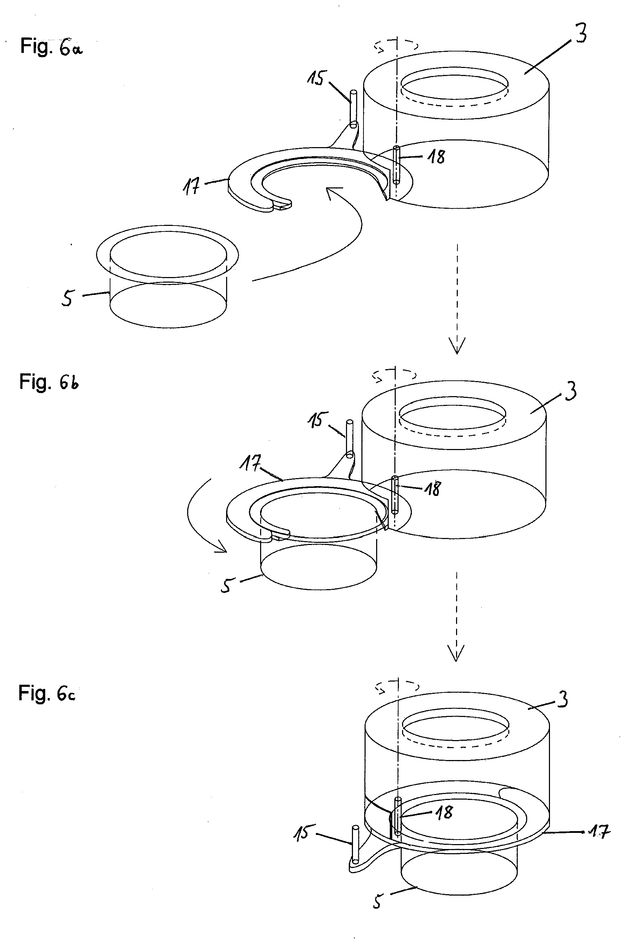

Fig. 6: Perspective view of a device and mechanism for inserting or ejecting the cutting edge which can be used e.g. in embodiments according to figures 1 to 3

In this embodiment, the cutting edge (5) is placed into a movable socket (17) which can be rotated laterally around an axis (18).

In Fig. 6a, the cutting edge (5) is inserted into the socket (17) which is, in this step, laterally displaced in relation to the remaining part of the punch (3).

In Fig. 6b, rotation around said axis (18) in direction of the remainder of the punch (3) is achieved with the help of a lever (15) for better handling of the socket (17).

In Fig. 6c, the socket (17) containing the cutting edge (5) is attached to the remainder of the punch (3). The cutting edge is now ready to be used in the context of the excising device. After an excision event, it can be replaced by performing the steps depicted in 6c to 6a in the order c 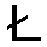 b 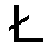 a.

## Claims

1. A method for excising a portion from a solid support (1) containing a biological sample (2), said method comprising the steps:
a) providing a biological sample on a solid support, wherein said solid support is made of at least one material selected from the group of cellulose, glass, plastic, or cotton
b) providing an excising device for excising a portion of a solid support containing a biological sample, said device comprising a punch (3) and a bearing (4), said punch comprising a cutting edge (5) being a grommet made of metal, said device further comprising a fixture (6) connecting said punch and said bearing and guiding them in relation to each other
c) excising a portion of said solid support containing said biological sample with said device by pressing said cutting edge against said solid support which is supported by said bearing, wherein the cutting edge is disabled by deformation as a result of the excision
d) separating said excised portion of said solid support containing said biological sample from the remainder of the solid support
e) removing said cutting edge from said excising device and discarding said cutting edge
wherein said solid support and said bearing are separated by a separation layer (9).

2. The method of claim 1, further comprising transferring said portion to a vessel (7).

3. The method of any of the preceding claims, wherein the bearing is the rim (8) of a vessel opening.

4. The method of any of the preceding claims, wherein the cutting edge is ring-shaped.

## Patentansprüche

1. Ein Verfahren zum Herausschneiden eines Teils aus einem festen Träger (1), der eine biologische Probe (2) enthält, wobei das Verfahren die folgenden Schritte umfasst:
a) Bereitstellen einer biologischen Probe auf einem festen Träger, wobei der feste Träger aus mindestens einem Material, ausgewählt aus der Gruppe von Cellulose, Glas, Kunststoff oder Baumwolle, hergestellt ist
b) Bereitstellen einer Vorrichtung zum Herausschneiden zum Herausschneiden eines Teils eines festen Trägers, der eine biologische Probe enthält, wobei die Vorrichtung eine Stanze (3) und eine Auflage (4) umfasst, wobei die Stanze eine Schneidkante (5), die eine Metallöse ist, umfasst, wobei die Vorrichtung ferner eine Halterung (6) umfasst, welche die Stanze und die Auflage verbindet und sie in einer Beziehung zueinander führt
c) Herausschneiden eines Teils des festen Trägers, der die biologische Probe enthält, mit der Vorrichtung durch Drücken der Schneidkante gegen den festen Träger, der durch die Auflage gestützt ist, wobei die Schneidkante durch Verformung als Ergebnis des Herausschneidens deaktiviert wird
d) Trennen des herausgeschnittenen Teils des festen Trägers, der die biologische Probe enthält, vom Rest des festen Trägers
e) Entfernen der Schneidkante aus der Vorrichtung zum Herausschneiden und Verwerfen der Schneidkante
wobei der feste Träger und die Auflage durch eine Trennschicht (9) getrennt sind.

2. Das Verfahren nach Anspruch 1, ferner umfassend das Übertragen des Teils in ein Behältnis (7).

3. Das Verfahren nach einem der vorhergehenden Ansprüche, wobei die Auflage der Rand (8) einer Behältnisöffnung ist.

4. Das Verfahren nach einem der vorhergehenden Ansprüche, wobei die Schneidkante ringförmig ist.

## Revendications

1. Une méthode d'extraction d'une partie d'un support solide (1) contenant un échantillon biologique (2), ladite méthode 1 comprenant les étapes :
a) fournir un échantillon biologique sur un support solide, dans laquelle ledit support solide est constitué d'au moins un matériau choisi dans le groupe d'une cellulose, d'un verre, d'un plastique ou d'un coton
b) fournir un dispositif d'extraction pour l'extraction d'une partie d'un support solide contenant un échantillon biologique, ledit dispositif comprenant un poinçon (3) et un palier (4), ledit poinçon comprenant un bord de coupe (5) qui est un oeillet constitué de métal, ledit dispositif comprenant en outre une fixation (6) reliant ledit poinçon et ledit palier et les guidant l'un par rapport à l'autre,
c) extraire une partie dudit support solide contenant ledit échantillon biologique avec ledit dispositif en pressant ledit bord de coupe contre ledit support solide qui est supporté par ledit palier, dans laquelle le bord de coupe est désactivé par déformation suite à l'extraction
d) séparer ladite partie extraite dudit support solide contenant ledit échantillon biologique du reste du support solide
e) retirer ledit bord de coupe dudit dispositif d'extraction et mettre au rebut ledit bord de coupe
dans laquelle ledit support solide et ledit palier sont séparés par une couche de séparation (9).

2. La méthode selon la revendication 1, comprenant en outre le transfert de ladite partie vers un récipient (7).

3. La méthode selon l'une quelconque des revendications précédentes, dans lequel le palier est le bord (8) d'une ouverture de récipient.

4. La méthode selon l'une quelconque des revendications précédentes, dans lequel le bord de coupe est en forme d'anneau.
